# EUROPÄISCHE PATENTSCHRIFT

(11) **EP 2 896 497 B1**
(45) Veröffentlichungstag und Bekanntmachung des Hinweises auf die Patenterteilung: **13.09.2017**
(21) Anmeldenummer: 14195090.7
(22) Anmeldetag: 27.11.2014
(51) Int. Cl.: B29D 30/32

(54) **Verfahren zur Herstellung eines Fahrzeugreifens**
Method for producing a tyre for a vehicle
Procédé de fabrication d'un pneu de véhicule

(30) Priorität: 21.01.2014 DE 102014200986
(43) Veröffentlichungstag der Anmeldung: 22.07.2015
(73) Patentinhaber: Continental Reifen Deutschland GmbH, 30165 Hannover (DE)
(72) Erfinder: Schulze, Norbert, 26427 Holtgast (DE)
(74) Vertreter: Widjaja, Wira

(56) Entgegenhaltungen:
- EP-A1- 2 671 711
- WO-A1-01/08874
- WO-A1-03/095185
- WO-A1-2012/156135
- GB-A- 620 660
- LU-A1- 36 555

## Beschreibung

Die Erfindung betrifft ein Verfahren zur Herstellung eines Fahrzeugreifens.

Bei konventionellen Fahrzeugreifen ist bekannt die Einlage im Reifenwulst um einen Wulstkern herumzuschlagen. Dadurch wird die Einlage bzw. die Karkasslage fest im Reifenwulst verankert. Solche herkömmlichen Fahrzeugreifen werden dadurch hergestellt, dass zunächst die Innenschicht und die Einlagen als breite Materiallagen auf einer Reifenaufbautrommel angeordnet werden. Anschließend wird der Wulstkern auf die Einlage gesetzt und das Einlagenende um den Kern herumgeschlagen.
Bei der konventionellen Reifenherstellung wird bei einem Verfahrensschritt das Einlagenende von der Reifeninnenseite um den Wulstkern herumgeschlagen. Bei einem zweistufigen Verfahren zur Herstellung von Fahrzeugreifen wird die Reifenkarkasse auf einer separaten Karkasstrommel aufgebaut. Eine solche Karkasstrommel ist in der Regel relativ komplex aufgebaut.

Bei den herkömmlichen Reifenaufbauverfahren werden auf der Karkasstrommel beide Seitenwände aufgewickelt. Anschließend wird die Reifenkarkasse mit den bereits applizierten Seitenwänden zu der Bombiertrommel verfahren. Ein Nachteil bei diesem herkömmlichen Verfahren besteht darin, dass bestimmte Reifenkonstruktionen nicht realisierbar sind.
Bei dem Reifenaufbau auf der Bombiertrommel kann es zu Problemen bei der Umschlingung von Seitenwand- und Karkasseinlage um den Reifenkern kommen.

*Die* WO 2012/156135 A1, GB 620 660 A, EP 2 671 711 A1 und WO 03/095185 A1, WO 01/08874 A1 und LU 36 555 A1 offenbaren bekannte Vorrichtungen zur Herstellung von Fahrzeugreifen.

Der Erfindung liegt die Aufgabe zugrunde, ein Verfahren bereitzustellen, mit dem ein Fahrzeugreifen auf einfache Weise hergestellt werden kann.
Außerdem soll eine feste Umschlingung der Karkasseinlage um den Reifenkern sicher gestellt werden.

Gelöst wird die Aufgabe mit einem Verfahren gemäß Anspruch 1.

Ein Vorteil der Erfindung ist insbesondere darin zu sehen, dass durch das Verfahren auf einfache Weise ein Fahrzeugreifen hergestellt werden kann.
Das Verfahren ermöglicht ebenfalls die Herstellung von speziellen Reifenkonstruktionen, die mit den herkömmlichen Reifenaufbauverfahren bisher nicht möglich waren. Diese Art der Reifenkonstruktion wird durch die erfindungsgemäße Reihenfolge der Verfahrensschritte nach Patentanspruch 1 ermöglicht.
Ein weiterer wesentlicher Vorteil besteht darin, dass mit dem Verfahren eine hochfeste Umschlingung der Karkasseinlage um den Reifenkern sicher gestellt wird. Die Schultersegmente drücken das überstehende Karkasslagenteil radial nach außen und seitlich fest gegen den Reifenkern. Durch diesen Andrückvorgang werden außerdem Lufteinschlüsse zwischen dem Reifenkern und der Karkasseinlage aus dem Reifenwulst herausgedrückt. Durch die Vermeidung von Lufteinschlüssen im Reifenwulst wird die Herstellungsqualität der Fahrzeugreifen wesentlich verbessert.

In einer vorteilhaften Weiterbildung der Erfindung ist vorgesehen, dass bei Schritt d) das Expandieren der Schultersegmente mit einem Hebelmechanismus erfolgt.
Dadurch lässt sich das Expandieren der Schultersegmente mit einer hohen Präzision realisieren.

In einer weiteren vorteilhaften Weiterbildung der Erfindung ist vorgesehen, dass der Hebelmechanismus mit einem pneumatischen Antrieb an der Bomiertrommel bewegt wird. Dadurch lässt sich der Hebelmechanismus auf einfache Weise und mit einer hohen Geschwindigkeit antreiben. Es ist vorgesehen, dass bei Schritt e) das Hochschlagen der Seitenwände mit einer Vielzahl von Rollenhebeln erfolgt. Auf diese Weise werden die Seitenwände mit einer hohen Präzision und Schnelligkeit an der Reifenkarkasse hochgeschlagen.

In einer weiteren vorteilhaften Weiterbildung der Erfindung ist vorgesehen, dass die Schultersegmente eine Aufnahme für die Rollen der Rollenhebel umfassen, wobei bei Schritt d) die Rollenhebel mit den Schultersegmente in eine Vorposition expandieren, wodurch die einzelnen Rollen an die Unterseite der Seitenwände angelegt werden.

Auf diese Weise besitzen die Schultersegmente eine zweite Funktion. Das Anheben der Rollenhebel dient insbesondere dazu, diese in eine optimale Startposition vorzupositionieren.

In einer weiteren vorteilhaften Weiterbildung der Erfindung ist vorgesehen, dass die Schultersegmente eine schräge Rampe für die Rollen der Rollenhebel umfassen, wobei bei Schritt e) die Rollen der Rollenhebel entlang der Rampe an den Schultersegmente angehoben und die überstehenden Karkasslagenteilen gegen den Reifenwulst gedrückt werden.

Dadurch wird das Anheben der Rollenhebel unterstützt.

In einer weiteren vorteilhaften Weiterbildung der Erfindung ist vorgesehen, dass bei Schritt c) die Segmente für die Kernklemmung und die Schultersegmente gleichzeitig in radialer Richtung expandieren.

Dadurch wird die Zykluszeit zur Herstellung des Fahrzeugreifens reduziert.

Es ist vorgesehen, dass die Rollenhebel vor Schritt c) durch eine an den Schultersegmenten angeordnete Fliehkraftsicherung fixiert werden.
Mit der Fliehkraftsicherung wird sicher gestellt, dass bei der Rotation der Bombiertrommel die Rollenhebel nicht willkürlich auseinanderspreizen.

In einer weiteren vorteilhaften Weiterbildung der Erfindung ist vorgesehen, dass die Fliehkraftsicherung eine Nut in den Schultersegmenten und an den Rollenhebeln angeordnete hineinragende Achsbolzen umfasst.
Dadurch wird eine sichere Fixierung der Rollenhebel an den Schultersegmenten erreicht. In einer weiteren vorteilhaften Weiterbildung der Erfindung ist vorgesehen, dass die Rollenhebel über einen pneumatischen externen Antrieb bewegt werden.

Auf diese Weise kann auf einen internen Antrieb in der Bombiertrommel verzichtet werden.

In einer weiteren vorteilhaften Weiterbildung der Erfindung ist vorgesehen, dass die Reifenkarkasse auf der Karkasstrommel in Form eines flachen Schlauches ohne einen Lagenumschlag vorkonfektioniert wird.
Es erfolgt auf der Karkasstrommel kein Lagenumschlag. Die Reifenkarkasse wird in Form eines flachen Schlauches zu der Bombiertrommel transferiert. Der Lagenumschlag der Karkasseinlage erfolgt bei dieser Variante zusammen mit dem Hochschlagen der Seitenwände.

In einer weiteren vorteilhaften Weiterbildung der Erfindung ist vorgesehen, dass die Seitenwand vor dem Transfer des Gürtel-Laufstreifen-Paketes über die Bombiertrommel hochgeschlagen wird.
Dadurch ist eine bestimmte Reifenkonstruktion realisierbar, bei der die Seitenwand unter dem Gürtel-Laufstreifen-Paket angeordnet werden kann.

In einer weiteren vorteilhaften Weiterbildung der Erfindung ist vorgesehen, dass die Seitenwand nach dem Transfer des Gürtel-Laufstreifen-Paketes über die Bombiertrommel hochgeschlagen wird, wobei ein Teil der Seitenwand über dem Laufstreifen angeordnet werden kann.
Dadurch ist es möglich, den oberen Teil der Seitenwand über dem Gürtel-Laufstreifen-Paket anzuordnen.

In einer weiteren vorteilhaften Weiterbildung der Erfindung ist vorgesehen, dass die Segmente für die Kernklemmung pneumatisch oder mit einem motorischen Antrieb expandiert werden.
Dadurch lassen sich die Segmente relativ schnell und mit einer hohen Präzision expandieren.

Anhand mehrerer Ausführungsbeispiele soll die Erfindung näher erläutert werden. Es zeigen:

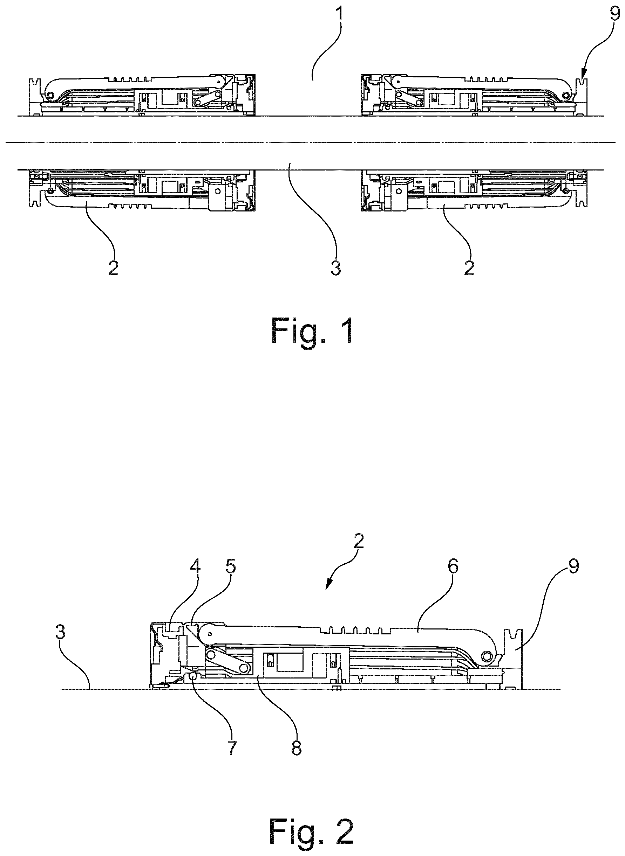

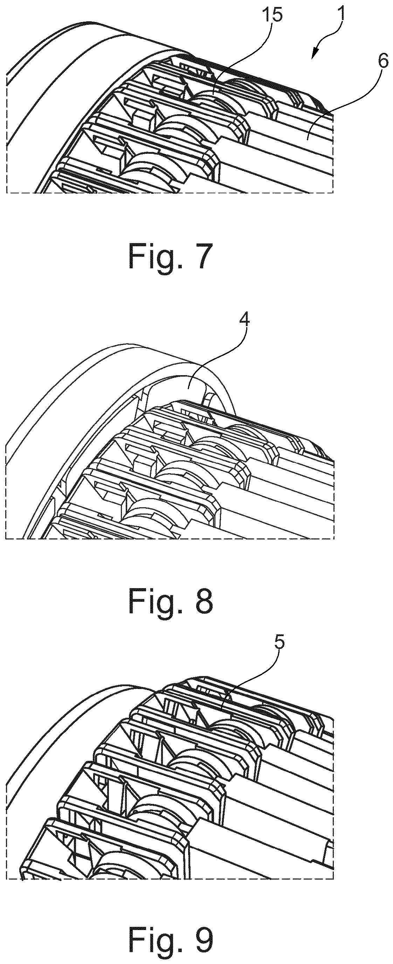

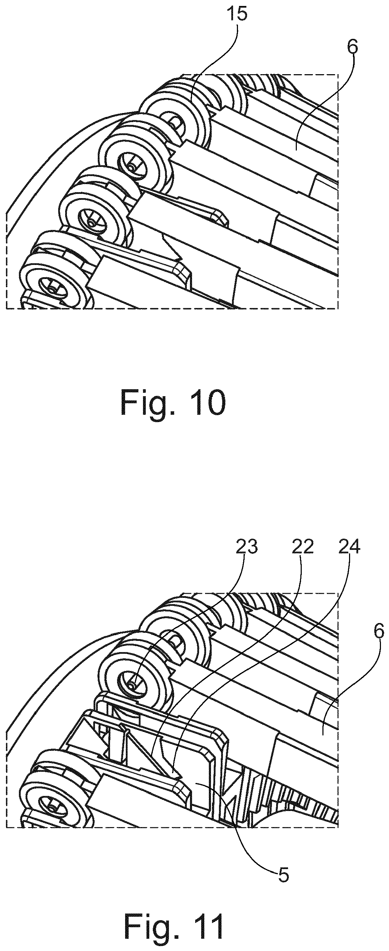

Figuren 1 - 11: ein Ausführungsbeispiel des erfindungsgemäßen Verfahrens.

Die Figur 1 zeigt die Bombiertrommel 1 in einem Anfangszustand. Auf der Welle 3 der Bombiertrommel 1 sind ein linker und rechter Bombierkopf 2 angeordnet.

Die Figur 2 zeigt einen Ausschnitt der Bombiertrommel 1 in einer Querschnittansicht. Der rechte Bombierkopf 2 umfasst die Segmente 4 für die Kernklemmung. Das Schultersegment 5, den Antrieb 7 für das Kernklemmsegment, den Antrieb 8 für das Schultersegment, den Rollenhebel 6 und die Kupplungsscheibe 9 für den Antrieb der Rollenhebel.

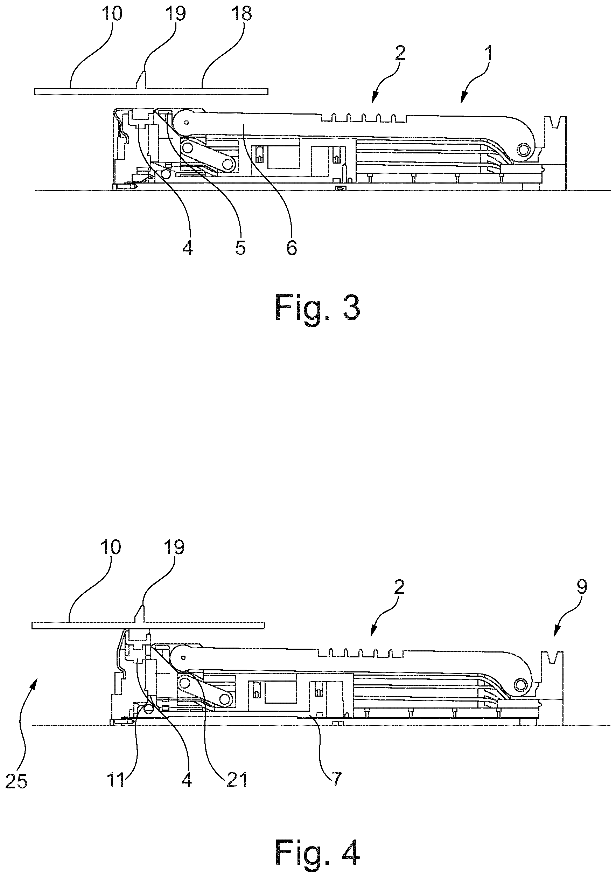

Die Fig. 3 zeigt den Verfahrenssschritt, bei dem die Segmente 4 und 5 sowie der Rollenhebel 6 eingefallen sind. Die Reifenkarkasse 10 wird koaxial zur Bombiertrommel 1 positioniert. Die Reifenkarkasse 10 umfasst neben dem Reifenkern 19 ein überstehendes Karkasslagenteil 18, welches im Normalfall eine Seitenwand umfasst. Die Übergabe der Reifenkarkasse 10 an die Bombiertrommel 1 erfolgt mit einer nicht dargestellten Tragevorrichtung.

Die Fig. 4 zeigt den Verfahrensschritt, bei dem die Kernklemmsegmente 4 in radialer Richtung 25 expandieren. Das Expandieren erfolgt mit dem Hebelmechanismus 11 und dem pneumatischen Antrieb 7, der in Form eines pneumatischen Zylinders augebildet ist. Die Kernklemmsegmente 4 klemmen die Reifenkarkasse 10 unterhalb des Kernes 19 fest.

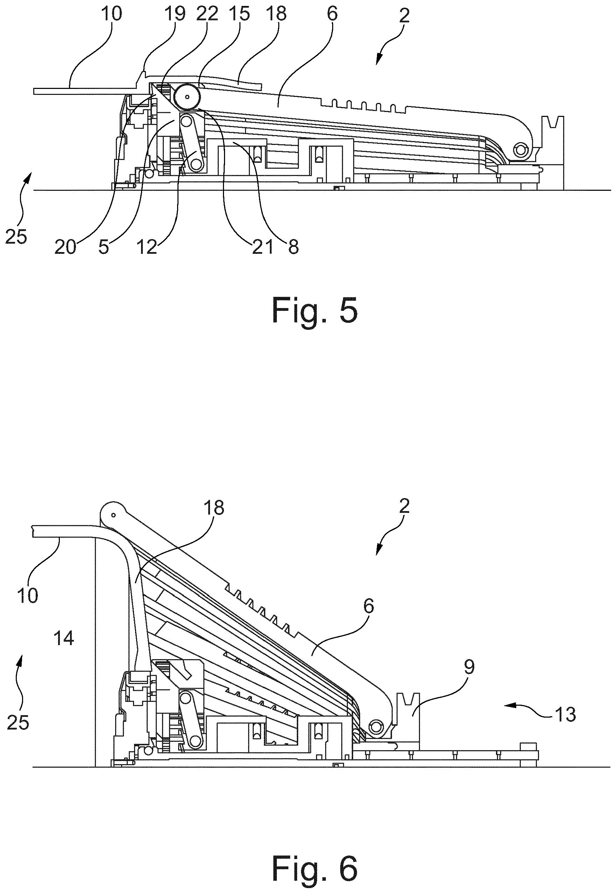

Die Fig. 5 zeigt den Verfahrensschritt, bei dem die Schultersegmente 5 in radialer Richtung 25 expandieren. Das Expandieren der Schultersegmente 5 erfolgt mit dem pneumatischen Antrieb 8 und dem Hebelmechanismus 12.

Bei diesem Vorgang wird die spitzförmige Kontur 20 des Schultersegmentes 5 gegen einen Teilbereich des überstehenden Karkasslagenteiles 18 gedrückt. Bei der radialen Expansion der Schultersegmente wird dieser Teilbereich des überstehenden Karkasslagenteiles 18 fest gegen den Reifenkern 19 geschoben, so dass Lufteinschlüsse vollständig herausgedrückt werden. Der Reifenkern 19 auf der Reifenkarkasse 10 wird bei diesem Andrückvorgang in einer optimalen Position gehalten, um nachfolgend die Seitenwände hochzuschlagen. Das Schultersegment 5 weist ebenfalls eine Aufnahme 21 für die Rollen 15 auf. Durch das Expandieren der Schultersegmente 5 werden die Rollen 15 an den Rollenhebeln 6 ebenfalls angehoben. Die Rollen 15 werden dadurch unterhalb des überstehenden Karkasslagenteiles angelegt.

Die Fig. 6 zeigt den Verfahrensschritt, bei dem durch Einblasen von Luft in den Bombierraum 14 die Reifenkarkasse 10 aufgebläht wird. Anschließend erfolgt das Hochschlagen des überstehenden Karkasslagenteiles 18 an der Reifenkarkasse 10. Beim Hochschlagen expandieren die Rollenhebel 6 in radialer Richtung 25. Die Rollenhebel 6 sind auf der Hinterseite mit einer Kupplungsscheibe 9 verbunden. Die Kupplungsscheibe 9 wird über einen externen Antrieb in axialer Richtung 13 bewegt. Bei dieser Bewegung spreizen die Rollenhebel 6 in der dargestellten Weise auseinander.
Der externe Antrieb wird vorrangig ein motorischer Antrieb sein, kann aber auch pneumatisch sein. Gegebenenfalls ist auch ein interner pneumatischer Antrieb möglich.

Die Fig. 7 zeigt einen Ausschnitt der Bombiertrommel in einer dreidimensionalen Ansicht. Die Rollenhebel 6 und die einzelnen Rollen 15 sind in einem eingefallenen Zustand dargestellt.

Die Fig. 8 zeigt den Verfahrensschritt, bei dem die Kernklemmsegmente 4 in radialer Richtung expandiert sind.

Die Fig. 9 zeigt den Verfahrensschritt, bei dem die Schultersegmente 5 in radialer Richtung expandiert sind, um die Schulter an der Reifenkarkasse zu bilden.

Die Fig. 10 zeigt den Verfahrensschritt, bei dem die Rollenhebel 6 auseinanderspreitzen, um das übersetehende Karkasslagenteil an der bombierten Reifenkarkasse hochzuschlagen.

Die Fig. 11 zeigt die Funktionsweise der Fliehkraftsicherung an den Schultersegmenten 5. Die Schultersegmente 5 weisen eine Nut 24 auf. Im eingefallenen Zustand der Rollenhebel 6 ragen die Achsbolzen 23 in die Nut 24 an den Schultersegmenten 5 hinein. Dadurch können die Rollenhebel bei einer Rotation der Bombiertrommel nicht unwillkürlich auseinanderspreitzen.

Beim Expandieren der Schultersegmente 5 gleiten die Achsbolzen 23 an der Rampe 22 hoch. Bei diesem Vorpositionieren der Rollenhebel 6 werden die Achsbolzen 23 aus der dargestellten Fliehkraftsicherung herausgehoben. Anschließend expandieren die Rollenhebel 6 in radialer Richtung, um das überstehende Karkasslagenteil an der Reifenkarkasse hochzuschlagen.

### Bezugszeichenliste für die Fig. 1 bis 19 (ist Teil der Beschreibung)

- 1: Bombiertrommel
- 2: Linker und rechter Bombierkopf
- 3: Welle
- 4: Segemente für Kernklemmung bzw. Kernklemmsegment
- 5: Schultersegment
- 6: Rollenhebel
- 7: Antrieb für Kernklemmsegment
- 8: Antrieb für Schultersegment
- 9: Kupplungsscheibe für den Antrieb der Rollenhebel
- 10: Reifenkarkasse ohne Lagenumschlag
- 11: Hebelmechanismus für Kernklemmsegmente
- 12: Hebelmechanismus für Schultersegmente
- 13: axiale Bewegung
- 14: Bombierraum
- 15: Rolle am Rollenhebel
- 16: Nut im Schultersegment
- 17: Achsbolzen für Rolle
- 18: überstehendes Karkasslagenteil (optional mit Seitenwand)
- 19: Reifenkern mit Apex
- 20: spitzförmige Kontur des Schultersegmentes
- 21: Aufnahme für Rollen der Schultersegmente
- 22: Rampe an Schultersegment
- 23: hineinragende Achsbolzen
- 24: Nut an Schultersegment
- 25: radiale Richtung

## Patentansprüche

1. Verfahren zur Herstellung eines Fahrzeugreifens mit einer Reifenkarkasse, Reifenwülsten mit Reifenkernen (19), einem Reifengürtel, zwei Seitenwänden und einem Laufstreifen mit folgenden Schritten:
a) Fertigstellen einer Reifenkarkasse (10) mit einer Karkasstrommel,
b) Anordnen der vorkonfektionierten Reifenkarkasse (10) mit einer Karkasstransfer-Einheit koaxial zur Bombiertrommel (1),
wobei die Reifenkerne (19) mit der Reifenkarkasse (10) jeweils koaxial zu den Segmenten (4) für die Kernklemmung positioniert werden,
c) Expandieren der Segmente (4) für die Kernklemmung in radialer Richtung (25),
wobei die Reifenkarkasse (10) unterhalb der Reifenkerne (19) jeweils über eine begrenzte Hubbewegung mit den Segmenten (4) eingeklemmt und an die Bombiertrommel (1) übergeben wird,
d) Expandieren von Schultersegmenten (5) in radialer Richtung (25),
wobei die Schultersegmente (5) in axialer Richtung seitlich neben den Segmenten (4) für die Kernklemmung angeordnet und in der Querschnittansicht spitzförmig (20) ausgebildet sind,
wobei die Schultersegmente (5) einen neben den Reifenkernen (19) überstehenden Karkasslagenteil (19) radial nach außen und seitlich fest gegen den Reifenkern (10) andrückt,
wodurch der Bereich zwischen Reifenkarkasse (10) sowie Reifenkernen (19) entlüftet und das nachfolgende Hochschlagen der überstehenden Karkasslagenteile (18) durch eine feste Klemmung zwischen den Reifenkernen (19) sowie der Reifenkarkasse (10) unterstützt wird,
wobei ein Hochschlagmittel (6), dass eine Vielzahl von Rollenhebeln (6) umfasst, unterhalb des überstehenden Karkasslagenteiles (18)
angelegt wird,
e) Bombieren der Reifenkarkasse,
wobei überstehende Karkasslagenteile (18) der Reifenkarkasse (10) mit der Vielzahl von Rollenhebeln (6) seitlich an der Reifenkarkasse (10) hochgeschlagen werden und die Reifenkarkasse (10) mit einem koaxial angeordneten Gürtel-Laufstreifen-Paket vereinigt wird,
f) Fertigstellen des Reifenrohlings mit weiteren Schritten, wobei die Rollenhebel (6) vor Schritt c) durch eine an den Schultersegmenten (5) angeordnete Fliehkraftsicherung (24) fixiert werden.

2. Verfahren nach Anspruch 1,
**dadurch gekennzeichnet, dass**
bei Schritt d) das Expandieren der Schultersegmente (5) mit einem Hebelmechanismus (12) erfolgt.

3. Verfahren nach einem der vorhergehenden Ansprüche,
**dadurch gekennzeichnet, dass**
der Hebelmechanismus (12) mit einem pneumatischen Antrieb (8) an der Bomiertrommel (1) bewegt wird.

4. Verfahren nach einem der vorhergehenden Ansprüche,
**dadurch gekennzeichnet, dass**
die Schultersegmente (5) eine Aufnahme (21) für die Rollen der Rollenhebel umfassen,
wobei bei Schritt d) die Rollenhebel (6) mit den Schultersegmente (5) in eine Vorposition expandieren, wodurch die einzelnen Rollen (15) an die Unterseite der überstehenden Karkasslagenanteile (18) angelegt werden.

5. Verfahren nach einem der vorhergehenden Ansprüche,
**dadurch gekennzeichnet, dass**
die Schultersegmente (5) eine schräge Rampe (22) für die Rollen (15) der Rollenhebel (6) umfassen,
wobei bei Schritt e) die Rollen (15) der Rollenhebel (6) entlang der Rampe (22) an den Schultersegmenten (5) angehoben und die überstehenden Karkasslagenteilen (18) gegen den Reifenwulst gedrückt werden.

6. Verfahren nach einem der vorhergehenden Ansprüche,
**dadurch gekennzeichnet, dass**
bei Schritt c) die Segmente (4) für die Kernklemmung und die Schultersegmente (5) gleichzeitig in radialer Richtung (25) expandieren.

7. Verfahren nach einem der vorhergehenden Ansprüche,
**dadurch gekennzeichnet, dass**
die Fliehkraftsicherung eine Nut (24) in den Schultersegmenten (5) und an den Rollenhebeln (6) angeordnete hineinragende Achsbolzen (23) umfasst.

8. Verfahren nach einem der vorhergehenden Ansprüche,
**dadurch gekennzeichnet, dass**
die Rollenhebel (6) über einen pneumatischen externen Antrieb bewegt werden.

## Claims

1. Method for producing a vehicle tyre with a tyre carcass, tyre beads with tyre cores (19), a tyre breaker belt, two sidewalls and a tread, comprising the following steps:
a) completing a tyre carcass (10) with a carcass drum,
b) arranging the prefabricated tyre carcass (10) coaxial to the shaping drum (1) with a carcass transfer unit,
the tyre cores (19) with the tyre carcass (10) in each case being positioned coaxially in relation to the segments (4) for the core clamping,
c) expanding the segments (4) for the core clamping in the radial direction (25), the tyre carcass (10) being clamped in under the tyre cores (19) with the segments (4) in each case by a limited displacing movement and transferred to the shaping drum (1),
d) expanding shoulder segments (5) in the radial direction (25),
the shoulder segments (5) being arranged laterally next to the segments (4) for the core clamping in the axial direction and being formed as pointed (20) in the cross-sectional view,
the shoulder segments (5) firmly pressing a carcass ply part (19) that is projecting alongside the tyre cores (19) radially outwards and laterally against the tyre core (10),
whereby the region between the tyre carcass (10) and the tyre cores (19) is vented and the subsequent turning-up of the projecting carcass ply parts (18) is assisted by a secure clamping between the tyre cores (19) and the tyre carcass (10),
a turning-up means (6), which comprises a multiplicity of roller levers (6), being placed under the projecting carcass ply part (18),
e) shaping the tyre carcass,
projecting carcass ply parts (18) of the tyre carcass (10) being turned up with the multiplicity of roller levers (6) laterally on the tyre carcass (10) and the tyre carcass (10) being combined with a coaxially arranged belt-tread assembly,
f) completing the green tyre by further steps,
the roller levers (6) being fixed before step c) by a centrifugal lock (24) arranged on the shoulder segments (5).

2. Method according to Claim 1,
**characterized in that**
in step d) the expanding of the shoulder segments (5) is performed by a lever mechanism (12).

3. Method according to either of the preceding claims,
**characterized in that**
the lever mechanism (12) is moved by a pneumatic drive (8) on the shaping drum (1).

4. Method according to one of the preceding claims,
**characterized in that**
the shoulder segments (5) comprise a receptacle (21) for the rollers of the roller levers,
in step d) the roller levers (6) expanding with the shoulder segments (5) into a preliminary position, whereby the individual rollers (15) are placed against the underside of the projecting carcass ply parts (18).

5. Method according to one of the preceding claims,
**characterized in that**
the shoulder segments (5) comprise a sloping ramp (22) for the rollers (15) of the roller levers (6), in step e) the rollers (15) of the roller levers (6) being raised along the ramp (22) on the shoulder segments (5) and the projecting carcass ply parts (18) being pressed against the tyre bead.

6. Method according to one of the preceding claims,
**characterized in that**
in step c) the segments (4) for the core clamping and the shoulder segments (5) expand simultaneously in the radial direction (25).

7. Method according to one of the preceding claims,
**characterized in that**
the centrifugal lock comprises a groove (24) in the shoulder segments (5) and protruding-in axial pins (23) arranged on the roller levers (6).

8. Method according to one of the preceding claims,
**characterized in that**
the roller levers (6) are moved by means of a pneumatic external drive.

## Revendications

1. Procédé de fabrication d'un bandage de roue de véhicule présentant une carcasse de bandage, des bourrelets de bandage dotés d'âmes (19) de bandage, une ceinture de bandage, deux parois latérales et une bande de roulement, le procédé présentant les étapes suivantes :
a) réaliser une carcasse de bandage (10) à l'aide d'un tambour de carcasse,
b) à l'aide d'une unité de transfert de carcasse, disposer coaxialement par rapport au tambour de bandage (1) la carcasse de bandage (10) pré-confectionnée, les âmes (19) de carcasse et la carcasse de bandage (10) étant disposées chacune coaxialement par rapport aux segments (4) de serrage d'âme,
c) dilatation des segments (4) de serrage d'âme dans la direction radiale (25), la carcasse de bandage (10) étant serrée avec les segments (4) en dessous des âmes du bandage (19), chaque fois par un déplacement limité, et étant transférée au tambour de bombage (1),
d) dilatation des segments d'épaulement (5) dans la direction radiale (25), les segments d'épaulement (5) étant disposés dans la direction axiale latéralement à côté des segments (4) de serrage d'âme et présentant en coupe transversale la forme d'une pointe (20),
les segments d'épaulement (5) repoussant radialement vers l'extérieur une partie (19) de couche de carcasse qui déborde à côté des âmes de bandage (19) et les repoussant latéralement contre l'âme de bandage (10),
suite à quoi la partie située entre la carcasse de bandage (10) et les âmes de bandage (19) est évacuée de son air et le rabattement ultérieur vers le haut des parties débordantes (18) de couche de carcasse étant soutenu par un serrage ferme entre les âmes de bandage (19) et la carcasse de bandage (10),
un moyen (6) de rabattement vers le haut qui comporte plusieurs leviers de roulement (6) étant placé en dessous de la partie en débord (18) de couche de carcasse,
e) bombage de la carcasse de bandage, les parties en débord (18) de couche de carcasse de la carcasse de bandage (10) étant rabattues vers le haut, latéralement contre la carcasse de bandage (10) à l'aide des différents leviers de roulement (6) et la carcasse de bandage (10) étant réunie à un ensemble disposé coaxialement de ceinture et de bande de roulement,
f) finition de l'ébauche de bandage dans d'autres étapes, les leviers de roulement (6) étant fixés avant l'étape c) par une protection (24) contre la force centrifuge disposée sur les segments d'épaulement (5).

2. Procédé selon la revendication 1, **caractérisé en ce qu'**à l'étape d), la dilatation des segments d'épaulement (5) s'effectue à l'aide d'un mécanisme (12) à levier.

3. Procédé selon l'une des revendications précédentes, **caractérisé en ce que** le mécanisme (12) à levier est déplacé à l'aide d'un entraînement pneumatique (8) sur le tambour de bombage (1).

4. Procédé selon l'une des revendications précédentes, **caractérisé en ce que** les segments d'épaulement (5) comportent un logement (21) pour les rouleaux des leviers à rouleaux et **en ce qu'**à l'étape d), les leviers (6) à rouleaux se déploient avec les segments d'épaulement (5) dans une position préalable, suite à quoi les différents rouleaux (15) sont placés sur le côté inférieur des parties en débord (18) de couche de carcasse.

5. Procédé selon l'une des revendications précédentes, **caractérisé en ce que** les segments d'épaulement (5) comportent une rampe oblique (22) pour les rouleaux (15) des leviers (6) à rouleaux, et **en ce qu'**à l'étape e), les rouleaux (15) des leviers (6) à rouleaux sont relevés le long de la rampe (22) sur les segments d'épaulement (5) et les parties en débord (18) de couche de carcasse sont repoussées contre le bourrelet de bandage.

6. Procédé selon l'une des revendications précédentes, **caractérisé en ce qu'**à l'étape c), les segments (4) prévus pour le serrage d'âmes et les segments d'épaulement (5) se dilatent simultanément dans la direction radiale (25).

7. Procédé selon l'une des revendications précédentes, **caractérisé en ce que** la protection contre la force centrifuge comporte une rainure (24) ménagée dans les segments d'épaulement (5) et des goujons axiaux (23) en débord disposés sur les leviers (6) à rouleaux.

8. Procédé selon l'une des revendications précédentes, **caractérisé en ce que** les leviers (6) à rouleaux sont déplacés par un entraînement pneumatique externe.
